# EUROPÄISCHE PATENTSCHRIFT

(11) **EP 3 045 742 B1**
(45) Veröffentlichungstag und Bekanntmachung des Hinweises auf die Patenterteilung: **13.03.2019**
(21) Anmeldenummer: 16151862.6
(22) Anmeldetag: 19.01.2016
(51) Int. Cl.: F16B 33/00, F16B 37/14, F16B 43/00, F16B 1/00

(54) **ANORDNUNG MIT EINEM SCHRAUBBAREN BEFESTIGUNGSELEMENT UND EINEM DICHTELEMENT, VERWENDUNG EINER DERARTIGEN ANORDNUNG UND VERFAHREN ZUM PRÜFEN DER DICHTHEIT EINER SOLCHEN ANORDNUNG**
ASSEMBLY WITH A SCREWABLE FASTENING ELEMENT AND A SEALING ELEMENT, USE OF SUCH AN ASSEMBLY AND METHOD FOR TESTING THE TIGHTNESS OF SUCH AN ASSEMBLY
SYSTEME COMPRENANT UN ELEMENT DE FIXATION FILETE ET UN ELEMENT D'ETANCHEITE, UTILISATION D'UN TEL SYSTEME ET PROCEDE DE VERIFICATION DE L'ETANCHEITE D'UN TEL SYSTEME

(30) Priorität: 19.01.2015 DE 102015100658
(43) Veröffentlichungstag der Anmeldung: 20.07.2016
(73) Patentinhaber: THALETEC GmbH, 06502 Thale (DE)
(72) Erfinder: Reinemuth, Jürgen, 38889 Blankenburg (DE); Twardy, Frank, 38889 Blankenburg (DE); Kaszkowiak, Mario, 06502 Thale (DE)
(74) Vertreter: Einsel, Martin

(56) Entgegenhaltungen:
- DE-B- 1 085 586
- JP-A- 2013 194 888
- JP-U- H0 577 609
- US-A1- 2009 147 429

## Beschreibung

Die Erfindung betrifft eine Anordnung mit einem in ein Bauteil schraubbaren Befestigungselement mit einem Gewinde und einem Schraubenkopf, mit einem Dichtelement zum Einschieben in eine Trennfuge zwischen einer Dichtfläche der Anordnung und einer vom Bauteil gebildeten Gegenfläche, wobei das Dichtelement durch Anziehen der Schraubverbindung zwischen der Dichtfläche und der Gegenfläche verspannt wird, wobei eine den Schraubenkopf überdeckende Kappe vorgesehen ist, wobei der Schraubenkopf ein Außengewinde und die Kappe ein Innengewinde aufweisen, wobei das Außengewinde und das Innengewinde ineinander eingreifen und ein Aufschrauben der Kappe auf den Schraubenkopf ermöglichen, und wobei die Dichtfläche der Anordnung von einer dem Bauteil zugewandten Unterseite der Kappe gebildet wird.

Darüber hinaus betrifft sie eine Konstruktion aus einem ersten und einem zweiten Bauteil, die miteinander durch eine oder mehrere derartige Anordnungen mit Befestigungselementen verbunden sind. Sie betrifft außerdem ein Verfahren zum Prüfen der Dichtheit einer derartigen Anordnung sowie ein Verfahren zum Prüfen der Dichtheit einer speziellen Ausführungsform der Konstruktion. Sie betrifft darüber hinaus eine Verwendung einer derartigen Anordnung oder Konstruktion.

Anordnungen mit schraubbaren Befestigungselementen dienen beispielsweise dazu, zwei Bauteile, insbesondere Platten, miteinander zu verbinden. Dabei ragt dann aus einer im Wesentlichen ebenen Platte nach dem Einschrauben ein Schraubenkopf einer Schraubverbindung hervor. Diese Schraubverbindung dient in und ggf. unterhalb der Platte dazu, die Platte mit etwas anderem, beispielsweise einer weiteren Platte, zu verbinden.

Anspruchsvoll wird die Situation dann, wenn die Oberseite der oberen Platte und auch der Schraubenkopf selbst durch ein korrosives Medium angegriffen werden. Dies ist beispielsweise dann der Fall, wenn sich die Situation auf der Innenseite der Wandung eines Behälters für die chemische Industrie abspielt. Die Wandung des Behälters selbst ist in solchen Fällen als Schutz gegen die Korrosion durch das Medium mit einer Emaillierung versehen.

Ein praktischer Anwendungsfall tritt beispielsweise dann ein, wenn auf der Innenseite der Wandung des Behälters eine Beschädigung eingetreten ist und diese Beschädigung durch ein Reparaturelement abgedichtet werden soll. Dieses Reparaturelement wird dann in der Praxis häufig plattenähnlich ausgebildet und auf den beschädigten Bereich der Innenseite der Wandung des Behälters aufgeschraubt.

Natürlich muss in solchen Fällen auch dieses Reparaturelement gegen die Korrosion seitens des korrosiven Mediums geschützt werden. Zu diesem Zweck ließe sich die Oberseite des Schraubenkopfes ebenso wie die Oberseite der Platte entsprechend emaillieren, es bleibt jedoch das Problem in dem Bereich dazwischen. Dieser Bereich in einer Trennfuge zwischen der Unterseite des Schraubenkopfs und der Oberseite der Platte würde bei einem Ausbleiben weiterer Schutzmaßnahmen einen Angriff des korrosiven Mediums etwa auf ein Schraubgewinde gestatten und somit rasch zur Zerstörung der Gesamtverbindung führen.

Ein Beispiel für eine mögliche Lösung dieses gravierenden Problems ist etwa in der DE 28 30 931 A1 dargestellt. Dort wird ein Verfahren zum Abdichten schadhafter Stellen von emaillierten Flächen beschrieben, wobei eine einteilige Schraube verwendet wird. Unter dem Schraubenkopf befindet sich ein Dichtelement, welches beim Anziehen der Schraube verpresst wird. Die Schraube wird so lange angezogen bis ihr Bund auf der Gegenfläche aufliegt, so dass die Dichtung sich dann im Kraftnebenschluss befindet.

Bekannt ist auch eine Schraubverbindung aus der DE 203 18 907 U1. Hier wird eine metallische Mutter mit einer Schneidkante und eingelegtem Dichtelement gegen eine metallische Fläche gezogen. Die Schneidkante realisiert einen Kraftnebenschluss für die eingesetzte Dichtung und sorgt zusätzlich für eine Abdichtung.

Eine weitere Verschraubung zur Befestigung von Bauteilen, beispielsweise von den oben bereits erwähnten Reparaturabdeckungen für emaillierte Flächen, ist in der EP 2 269 768 A1 beschrieben. Dort werden metallische Schraubelemente, also Gewindebolzen, Schrauben, Muttern, verwendet, die üblicherweise aus einem chemisch beständigen Werkstoff wie Tantal angefertigt sind. In Verbindung mit einem weichdichtenden Element wird der Schraubenkopf bzw. die Mutter gegen eine Gegenfläche hin abgedichtet. Da die Schraubelemente sowie die Gegenflächen metallisch sind, wird die Einleitung der Schraubenvorspannkraft über die metallische Berührung zwischen der Schraube bzw. der Mutter und der ebenfalls metallischen Gegenfläche realisiert.

Aus der US 2009/0147429 A1 ist eine Schutzvorrichtung gegen elektrische Entladungen von Befestigungselementen bekannt. Ein Befestigungselement wird über einen O-Ring auf einem Bauteil verschraubt. Eine Kappe mit einem Innengewinde wird darüber geschraubt. Die Kappe und der O-Ring bestehen aus einem nichtleitenden isolierenden Werkstoff.

Aus der JP 5-77609 U ist eine Verbindungseinrichtung für zwei plattenförmige Bauteile bekannt. Eine Schraube wird durch Ausnehmungen in den beiden Bauteilen geführt und dort verschraubt. Die Schraube zieht dabei die beiden plattenförmigen Bauteile zusammen. Oben über die Platte ist eine Kappe gesetzt, die ein Innengewinde aufweist, welches mit einem Außengewinde des Schraubenkopfes zusammenwirkt.

Die JP 2013-194888 A zeigt eine Schraube mit einem eingesenkten polygonalen Element zum Festziehen. Die Schraube lieg mit ihrem Schraubenkopf oben auf einem plattenförmigen Bauelement auf, um den Schraubenkopf kann eine Kappe aufgesetzt werden, die ein Innengewinde besitzt, welches mit einem Außengewinde auf dem Schraubenkopf kämmt.

Alle derzeit eingesetzten Systeme erfordern eine Schraubenverbindung, bei der ein metallischer Schraubenkopf gegen eine metallische Fläche gezogen wird. Dies ist grundsätzlich möglich, nicht jedoch bei emaillierten Flächen. Dann neigt die Emaillierung dazu, aufgrund der lokal hohen Flächenpressung unter dem Schraubenkopf bzw. der Mutter zerstört zu werden und abzuplatzen.

Versucht man dies zu vermeiden und wie oben in den Vorschlägen beschrieben ein weich dichtendes Element dazwischen zu legen, welches die Flächenpressung unter dem Schraubenkopf verteilt und sich an die Form der Emailfläche anpasst, so entsteht ein anderer wesentlicher Nachteil: Die Weichdichtung verhindert, dass die Schraubenverbindung mit einem hohen Drehmoment angezogen werden kann. Wird nämlich doch ein hohes Drehmoment verwendet, so wird die Weichdichtung zerdrückt oder zerstört und verliert ihre Wirkung. Bei allen derartigen Verbindungskonzepten muss darüber hinaus die Schraube und/oder die Mutter aus einem chemisch beständigen Werkstoff bestehen. Wird hierfür wie üblich Tantal verwendet, so müssen auch dessen Nachteile in Kauf genommen werden, nämlich eine sehr geringe Streckgrenze. Bei einem hohen Drehmoment wird somit deutlich die Gefahr erhöht, dass die Tantalschraube abgerissen wird

Anders formuliert wird im Stand der Technik stets versucht, durch ein besonders geschickt aufgebautes unterlegscheibenartiges Element eine Art Dichtung aufzubauen. Die Unterseite des Schraubenkopfes drückt jeweils dieses unterlegscheibenartige Element zusammen und zugleich auf die darunter liegende Platte. Dieses Element kann nun durch festes Anziehen zusammen gedrückt werden oder Widerstand leisten. Die entstehenden Kräfte führen aber zu einer Zerstörung dieser "Unterlegscheibe".

Aufgabe der Erfindung ist es daher, eine gattungsgemäße Anordnung vorzuschlagen, bei der eine Schutzwirkung gegenüber einem korrosiven Medium eintritt, ohne die Funktionalität herabzusetzen.

Diese Aufgabe wird bei einer gattungsgemäßen Anordnung mittels der Erfindung dadurch gelöst, dass das Dichtelement elektrisch nicht leitfähig ausgebildet ist, und dass in dem Dichtelement ein elektrisch leitfähiges Element, insbesondere ein bügelförmig gebogener dünner Draht, eingebettet ist, welches eine elektrisch leitfähige Verbindung zwischen der Außenseite des Dichtelements und der dem Befestigungselement zugewandten Innenseite des Dichtelements herstellt.

Mit anderen Worten besteht die Erfindung nun darin, nicht wie im Stand der Technik ein Element zwischen die Unterseite des Schraubenkopfes und die benachbarte Platte zu legen, sondern statt dessen diesen Schraubenkopf ohne zwischengeschaltetes Element direkt mit einem nicht emaillierten Bereich der darunter liegenden Platte in Verbindung zu bringen. Außerdem wird außen um den Schraubenkopf eine emaillierte oder nachträglich emaillierbare Kappe gesetzt und dann diese Kappe durch ein unterlegscheibenartiges Element gegenüber der Oberseite der Platte abgestützt.

Dadurch wird die eigentliche Verbindung zwischen Schraube mit Schraubenkopf und Platte vollständig von der Funktion des Korrosionsschutzes entlastet und muss auf diese Funktion nun auch keine Rücksicht mehr nehmen. Der Korrosionsschutz wird statt dessen von der darum herum angeordneten Kappe mit der darunter liegenden Unterlegscheibe in Form des jetzigen Dichtelements übernommen. Dieses Dichtelement muss nun seinerseits keine Rücksicht auf die Verbindungsqualität der Schraube mehr nehmen. Die Materialwahl wird dadurch wesentlich flexibler.

Damit entfällt die Zerstörungsproblematik der herkömmlichen Unterlegscheiben aus dem Stand der Technik. Die Kappe muss nämlich anders als im Stand der Technik der Schraubenkopf keinen Druck auf das Dichtelement ausüben, der schon durch das Einschrauben der Schraube in das Bauelement hervorgerufen wird. Stattdessen kann die Kappe einen völlig unabhängig davon gewählten und eindeutig nicht zerstörerischen Druck auf das Dichtelement ausüben, wobei dieser Druck ausschließlich durch die Dichtungsqualität vorgegeben wird und beispielsweise optimal auf das Material des Dichtelements abgestimmt werden kann.

Die Funktion der "Verbindung" der beiden Bauelemente oder eines Reparaturelements mit einem Bauelement wird durch die Schraube gewährleistet, die in das zu verbindende Bauteil eingeschraubt wird. Diese Schraube kann nun durch ein Innenprofil, bevorzugt durch einen Innensechskant, mit einem hohen Drehmoment angezogen werden. Dieses hohe Drehmoment kann so gewählt werden, dass die Verbindung optimal ist.

Da keine Dichtungsaufgaben mehr erfüllt werden müssen, kann die Emailschicht im Bereich der Auflage des Schraubenkopfes, also im Bereich der Gegenfläche, auch nicht beschädigt werden.

Die zweite Funktion des Korrosionsschutzes wird dagegen durch die Kappe gewährleistet. Diese Kappe besteht bevorzugt aus einem emaillierten Metall.

Diese emaillierte metallische Kappe wird außen auf die Schraube beziehungsweise auf den Schraubenkopf aufgeschraubt. Die Schraube verfügt also neben dem Gewinde, mit dem der Einschraubvorgang vorgenommen wird, auch noch über ein Außengewinde am Außendurchmesser des Schraubenkopfes, welches Außengewinde dann mit einem Innengewinde in der Kappe zusammenwirkt.

Das bedeutet, dass die Kappe und der Schraubenkopf relativ zu dem Bauteil unterschiedlich bewegt werden können, nämlich durch zwei unterschiedliche und unabhängige Schraubvorgänge.

Zwischen der Kappe und der Gegenfläche des zu verbindenden Bauteils befindet sich nun das Dichtelement, insbesondere aus einer weichelastischen Substanz, die beim Anziehen der Kappe gegen das Bauteil verpresst wird.

Durch diese Konstruktion ist sichergestellt, dass die zum Verbinden der Bauteile beziehungsweise des Reparaturelements mit dem Bauteil erforderliche Schraubenkraft eben nicht durch das Dichtelement, also nicht durch die Flachdichtung zwischen der Dichtfläche und der Gegenfläche geleitet wird. Dadurch ist es möglich, ein sehr hohes Schraubendrehmoment aufzubringen, um die Bauteile sicher zu verbinden, und zwar ohne das Dichtelement zu beschädigen oder überhaupt in Mitleidenschaft zu ziehen.

Besonders geeignet ist eine erfindungsgemäße Anordnung für eine Verwendung, die sich dadurch auszeichnet, dass mit der Anordnung eine Reparaturplatte als Bauteil auf der Innenseite eines emaillierten Behälters als Bauteil eingesetzt wird. Vorteilhafterweise kann die Schraube aus einem handelsüblichen Schraubenwerkstoff ausgeführt werden. Es ist also nicht mehr erforderlich, wie im Stand der Technik dafür Tantal zu verwenden. Der handelsübliche Schraubenwerkstoff führt nun dazu, dass die Herstellung darüber hinaus auch preiswert ist und die weiteren mechanischen Auslegungen der Schraubenverbindung nach den bekannten Regeln der Technik erfolgen können, ohne besondere Vorgaben beachten zu müssen.

Bevorzugt kann das Anziehen der Kappe durch Drehen relativ zum Schraubenkopf dadurch erfolgen, dass die Kappe über ein Außenprofil verfügt, bevorzugt über ein Polygonprofil mit einem Außendreieck mit beispielsweise drei gerundeten Ecken. Das Anziehen der Kappe kann dann mit einem entsprechend geformten Schraubenschlüssel vorgenommen werden.

Im Falle von korrosiven Medien wird das Bauteil im Bereich der produktberührten Oberflächen emailliert.

Es entsteht insgesamt der Vorteil, eine vollständig emaillierte Verbindung zwischen allen Bauteilen herzustellen, ohne dass andersartige Werkstoffe wie beispielsweise Tantal mit dem korrosiven Medium in Berührung kommen.

Das Anbringen der verschiedenen Elemente aufeinander erfolgt durch mehrere Gewinde durch das Vorsehen von Profilen mit Innenprofilen bzw. Außenprofilen, insbesondere von Polygonen wie Innensechskant bzw. Außendreikant.

Besonders bevorzugt ist es, wenn das Dichtelement aus einem expandierten Polytetrafluorethylen (PTFE) besteht, insbesondere aus einem multidirektional expandierten PTFE.

Dieses Material hat sich als sehr gut geeignet herausgestellt. Die Weichdichtung ist so besonders zuverlässig und exakt einstellbar vorsehbar.

Ferner ist es bevorzugt, wenn die Kappe aus einem korrosionsbeständigen Material aufgebaut oder korrosionsbeständig beschichtet ist und/oder selbst elektrisch nicht leitfähig ist.

Die Erfindung ist darüber hinaus auch in der Lage, eine besonders einfache Prüfung der Dichtheit der insgesamt entstehenden Dichtwirkung gegenüber einem korrosiven und/oder aggressiven elektrisch leitfähigen Medium prüfen zu können. Diese Prüfung hat den Vorteil, dass die Kappe nicht abgenommen werden muss, um sie vorzunehmen. Das bedeutet also, dass die existierende und an Ort und Stelle vorhandene und eingebaute Anordnung nicht auseinandergenommen werden muss, um die Prüfung vorzunehmen. Es muss also keine Beeinflussung des Bereiches erfolgen.

Die Erfindung zeichnet sich dadurch aus, dass das Dichtelement elektrisch nicht leitfähig ausgebildet ist, und dass in dem Dichtelement ein elektrisch leitfähiges Element, insbesondere ein bügelförmig gebogener dünner Draht, eingebettet ist, welches eine elektrisch leitfähige Verbindung zwischen der Außenseite des Dichtelements und der dem Befestigungselement zugewandten Innenseite des Dichtelements herstellt.

Besonders bevorzugt ist dabei vorgesehen, dass das leitfähige Element ein Draht mit einem maximalen Durchmesser von 0,5 mm ist, der vorzugsweise aus Tantal, Platin, Gold oder Silber oder aus einer Kohlenstofffaser aufgebaut ist.

Um nun das Verfahren zum Prüfen der Dichtheit einer derartigen Anordnung vorzunehmen, wird ein Verfahren eingesetzt, dass sich dadurch auszeichnet, dass zwischen dem zu verbindenden Bauteil und dem leitfähigen Element eine Spannung mittels einer Spannungsquelle angelegt wird und mittels eines Indikators, insbesondere einem Lämpchen, festgestellt wird, ob ein Strom fließt. Dabei wird eine Ausführungsform bevorzugt, bei der die Kappe selbst elektrisch nicht leitfähig ist oder eine elektrisch isolierende Schicht gegenüber dem Medium aufweist.

Auf diese Weise kann leicht festgestellt werden, ob sich im Innenraum ein elektrisch leitfähiges Medium befindet. In diesem Innenraum befindet sich auch die Schraube selbst in dem Bereich ihres Gewindes.

Für bestimmte Anwendungsfälle hat es sich darüber hinaus als besonders vorteilhaft erwiesen, das Befestigungselement mit einer durchgehenden inneren Bohrung zu versehen, die bevorzugt rotationssymmetrisch um die Drehachse des Befestigungselements vorgesehen ist. Sie kann gegenüber der Drehachse auch leicht gekippt oder knapp neben dieser gerade oder in geschwungener Form angeordnet sein, eine rotationssymmetrische Bohrung ist aber fertigungstechnisch am einfachsten in eine Prüfschraube einzubringen, die als Befestigungselement bevorzugt wird.

Auf der Außenseite des Befestigungselements wird eine Nut vorgesehen. Im Falle einer Prüfschraube mit einem Außengewinde wird bevorzugt die Nut ausgehend von dem unteren, dem Schraubenkopf abgewandten Ende der Prüfschraube senkrecht zu den Gewindegängen und somit ungefähr parallel zur Drehachse vorgesehen. Sie erstreckt sich von diesem unteren Ende ausgehend über einen erheblichen Teil der Länge der Prüfschraube beziehungsweise des Befestigungselements, und zwar bevorzugt über eine Strecke, die über die voraussichtliche Einschraubtiefe des Befestigungselements hinausragt.

Ist das Befestigungselement wie vorbeschrieben ausgebildet, so kann damit eine ununterbrochene Verbindung geschaffen werden, die von einem Raum zwischen den beiden Bauteilen ausgehend über die Nut bis in das Sackloch hineinführt, in welches das Befestigungselement eingeführt, insbesondere eingeschraubt ist. Dieses untere freie Ende des Sacklochs steht naturgemäß auch mit der Bohrung im Inneren der Schraube in Verbindung, sodass die durchgehende Verbindung auch durch diese Bohrung bis in den Schraubenkopf hineinführt.

Dort wird zur Durchführung einer Messung vorübergehend ein Anschlussstück angebracht, mit dem ein Druckmedium durch diese durchgehende, nicht unterbrochene Verbindung bis in ein inneres Volumen eingespeist wird, welches zwischen den beiden Bauteilen und einer umlaufenden Dichtung aufgebaut ist. Der Druck dieses Mediums oder auch die Änderung des Druckes dieses Mediums können messtechnisch erfasst und ausgewertet werden. Ändert sich dieser Druck nicht, ist also offensichtlich das Innenvolumen dicht und demzufolge der Druck des Druckmediums konstant. Ändert sich dieser Druck, nimmt er insbesondere ab, so entweicht offensichtlich Druckmedium durch Undichtigkeiten in der umlaufenden Dichtung oder an anderer Stelle und eine Undichtigkeit ist nachgewiesen. Diese Undichtigkeit kann dann entsprechend reduziert werden, indem beispielsweise das oder die Befestigungselemente nachgezogen werden oder die Dichtung modifiziert oder ersetzt wird.

Zweckmäßig wird vorgesehen, dass die erfindungsgemäß über dem Kopf des Befestigungselementes angebrachte Kappe für die Durchführung der Prüfung und die Beaufschlagung des inneren Volumens mit dem Druckmedium durch ein entsprechendes Anschlussstück vorübergehend ersetzt wird.

Weitere bevorzugte Merkmale sind in den Unteransprüchen dargestellt und gehen aus der nachfolgenden Beschreibungen von Ausführungsformen hervor.

Im Folgenden wird anhand der Zeichnung ein Ausführungsbeispiel und ein bevorzugtes Mess-Prüfverfahren näher erläutert. Es zeigen:
- **Figur 1**: einen Schnitt durch eine Ausführungsform der Erfindung, eingeschraubt in ein Bauteil;
- **Figur 2**: eine Draufsicht auf die Ausführungsform aus Figur 1;
- **Figur 3**: eine vergrößerte Einzelheit der Ausführungsform aus Figur 1;
- **Figur 4**: eine schematische Darstellung eines Prüfverfahrens für die Dichtheit der Ausführungsform aus Figur 1;
- **Figur 5**: einen Schnitt durch eine schematische Darstellung einer Ausführungsform der Erfindung mit zwei Bauteilen, einem eingeschlossenen inneren Volumen und einer umlaufenden Dichtung;
- **Figur 6**: eine perspektivische Ansicht eines Befestigungselements zu der Ausführungsform aus Figur 5; und
- **Figur 7**: eine schematische Darstellung eines Schnittes durch eine Anschlussvorrichtung für die Ausführungsform aus Figur 5.

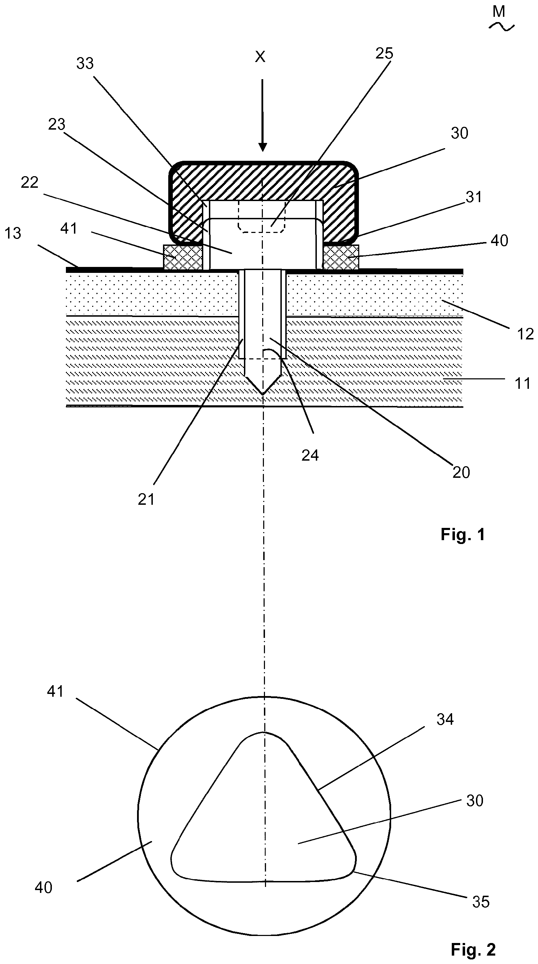

In der **Figur 1** ist eine Situation dargestellt, bei der zwei Bauteile durch ein Befestigungselement miteinander verbunden sind. Ein Medium M befindet sich im oberen Bereich der Figur 1 und kontaktiert die Oberseite der bereits miteinander verbundenen beiden plattenförmigen Bauteile. Dabei kann ein erstes Bauteil 11 etwa eine Wandung eines Behälters aus der chemischen Industrie sein, in dem sich das Medium M befindet, etwa zu Reaktionszwecken oder um in dem Behälter gerührt zu werden.

Ein zweites Bauteil 12 kann beispielsweise Teil eines Reparaturelementes sein, welches auf einer schadhaften Oberfläche des ersten Bauteils 11 angeordnet ist und diese gegenüber dem Medium M abdecken soll. Um dies ganz sicher vorzunehmen, müssen die beiden Bauteile 11 und 12 sehr fest miteinander verbunden und aufeinander gezogen werden.

Die Oberseite des zweiten Bauteils 12 steht mit dem Medium M also in Kontakt und bildet eine Gegenfläche 13, deren Zweck noch im Folgenden näher erläutert wird.

Die Verbindung der beiden Bauteile 11 und 12 miteinander erfolgt durch ein Befestigungselement 20, insbesondere eine Schraube. Diese Schraube hat wie üblich ein Gewinde 21 und einen Schraubenkopf 22, der sich oberhalb der beiden miteinander verbundenen Bauteile 11 und 12 in dem bereits miteinander verbundenen Zustand befindet. Das Gewinde 21 ist für eine Drehung um eine Drehachse 24 des Befestigungselements 20 ausgebildet.

Um den Schraubenkopf 22 und somit das Befestigungselement 20 um die Drehachse 24 drehen zu können, ist im Schraubenkopf 22 auf dessen Oberseite ein Innenprofil 25 eingelassen, insbesondere ein Innensechskant, der mit einem entsprechend ausgebildeten Werkzeug gegriffen wird, welches dann die Drehbewegung mit einem sehr hohen Drehmoment ermöglicht. Dadurch wird insgesamt eine sehr feste Verbindung der Bauteile 11 und 12 miteinander gewährleistet.

Die Unterseite des Schraubenkopfes 22 wird dabei direkt auf die metallische Oberseite des zweiten Bauteils 12 zu liegen kommen. Eine etwaige Emaillierung der Gegenfläche 13 in diesem Bereich wird entfernt beziehungsweise hier erfolgt keine Emaillierung, so dass die Verbindung fest ist und die nicht vorhandene Emaillierung natürlich auch nicht dem Risiko eines Abplatzens unterliegt.

Auf den Schraubenkopf 22 des Befestigungselements 20 wird von außen eine Kappe 30 aufgebracht. Die Kappe 30 ist ihrerseits emailliert beziehungsweise sie besteht aus einem korrosionsbeständigen Material oder ist in anderer Weise gegen das korrosive Medium M geschützt.

Die Kappe 30 wird auf den Schraubenkopf 22 dadurch aufgebracht, dass die Kappe 30 ein Innengewinde 33 besitzt, das genau abgestimmt ist auf ein Außengewinde 23, welches am Schraubenkopf vorgesehen ist. Es kann also eine Schraubbewegung der Kappe 30 um die Drehachse 24 herum erfolgen und dadurch die Kappe 30 unabhängig von der Drehbewegung des Schraubenkopfes 20 und des Befestigungselementes 20 zu den Bauteilen 11 und 12 relativ zum Schraubenkopf 22 gedreht und auf dieses aufgeschraubt werden.

Da das Befestigungselement 20 mit einem sehr hohen Drehmoment in den Bauteilen 11 und 12 bereits befestigt ist, führt diese zweite Drehbewegung der Kappe 30 um den Schraubenkopf 22 und ebenso auch eine gegebenenfalls vorgenommene Gegendrehbewegung zur Lösung der Kappe 30 vom Schraubenkopf 22 nicht zu einer Übertragung dieser Drehung auf den Schraubenkopf 22 selbst. Dieser bleibt also stehen, wenn die Kappe 30 auf ihn aufgeschraubt wird.

Die Kappe 30 wird nicht exakt bis hinunter zur Oberseite des zweiten Bauteils 12, also bis zur Gegenfläche 13, über den Schraubenkopf 22 geschraubt. Hier wird bewusst eine Trennfuge gelassen, die durch ein Dichtelement 40 gefüllt wird. Dieses Dichtelement ist in der dargestellten Ausführungsform weichdichtend ausgebildet und besteht vorzugsweise aus einem multidirektional expandierten Polytetrafluorethylen (PTFE). Dieses Material ist resistent gegenüber den aggressiven und/oder korrosiven Medien M, die in Betracht kommen, und dieses Material ermöglicht auch eine genaue und sorgfältig abgestimmte Verpressung beim Drehen der Kappe 30 mit der Kombination aus Außengewinde 23 und Innengewinde 33. Durch die Kappe 30 und das Dichtelement 40 wird also der Schraubenkopf 22 vollständig gegenüber dem korrosiven Medium M abgedichtet und kommt an keiner Stelle mehr mit diesem in Berührung, das das Dichtelement 40 auch rund um den Schraubenkopf 22 herum auf der Gegenfläche 13 aufliegt und die Trennfuge zwischen der Gegenfläche 13 und der Dichtfläche 31 auf der Unterseite der Kappe 30 vollständig ausfüllt.

Ein Blick von oben in Richtung X aus der Figur 1 ist in der **Figur 2** dargestellt. Man sieht hier im kreisförmigen Umriss der Kappe 30, der zugleich auch die Dichtfläche 31 und den aufliegenden Bereich des Dichtelements 40 auf der Gegenfläche 13 darstellt.

Zugleich sieht man auch, dass die Kappe 30 ein Außenprofil (alternativ auch ein Innenprofil) 34 aufweist, in welches ein weiteres Werkzeug eingesteckt beziehungsweise von außen aufgelegt werden kann, um eine Drehung der Kappe 30 um die Drehachse 24 herbeizuführen. Dabei wird bevorzugt ein Profil 34 mit verrundeten Kanten 35 verwendet.

Um die Drehbewegung der Kappe 30 um die Drehachse 24 relativ zum Schraubenkopf 22 besonders präzise vornehmen zu können, werden als Außengewinde 23 am Schraubenkopf 22 und als Innengewinde 33 der Kappe 30 jeweils bevorzugt Feingewinde eingesetzt.

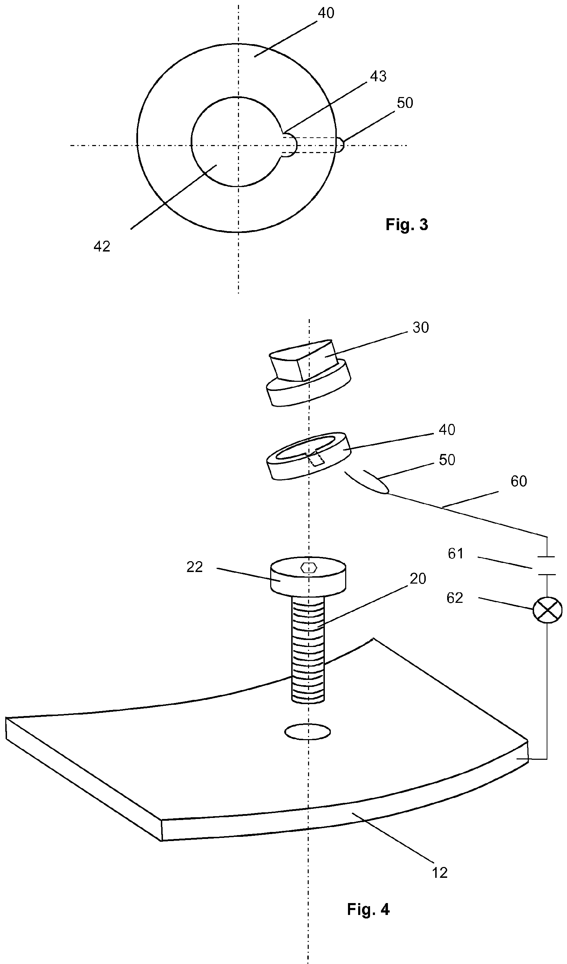

In der **Figur 3** wird das Dichtelement 40 in einer bevorzugten Ausführungsform nochmals separat herausgestellt in Draufsicht abgebildet.

Es ist interessant für den Anwender der erfindungsgemäßen Anordnung, sich über die Dichtheit in möglichst einfacher Form eine genaue Kenntnis zu verschaffen. Es geht also um die Frage, ob aus irgendeinem Grunde doch aggressives oder korrosives Medium in den Bereich des Befestigungselementes 20 hinein geraten sein könnte, von wo es die nicht gegen das korrosive Medium geschützte, aus einem herkömmlichen Material bestehende Schraube beziehungsweise das Befestigungselement angreifen und zerstören könnte und somit auch die Verbindungsqualität der Bauteile 11 und 12 miteinander gefährden würde. Darüber hinaus könnte das aggressive und korrosive Medium dann ja sogar in den Bereich des Bauteiles 11 hineingelangen und dort dieses direkt angreifen.

Für eine solche Prüfung ist es darüber hinaus von Vorteil, die Kappe 30 gar nicht erst vom Schraubenkopf 22 lösen zu müssen. Auf diese Weise bleibt nämlich die erfindungsgemäße Anordnung unverändert in dem zu prüfenden Zustand und muss nicht aufgelöst werden, was gerade bei einer solchen Prüfung nicht mehr beschleunigend wirkt, sondern auch den konkreten Zustand der Verbindung für gegebenenfalls weitere Untersuchungen erhält. Ohne Lösen der Kappe 30 ist aber keine visuelle Prüfung eines Innenraums 42 des Dichtelements 40 möglich.

Hierzu wird eine Tasche 43 am Innenraum 42 des Dichtelements 40 vorgesehen, die also eine bewusste Vergrößerung dieses Innenraums 42 im Inneren des im Übrigen weitgehend zylindrischen Dichtelements 40 vornimmt.

Darüber hinaus wird mittig in Bezug auf die Dicke des Dichtelements 40, also mittig in Bezug auf die Messung des Dichtelements 40 parallel zur Drehachse 24, von außen ein leitfähiges Element 50 eingesteckt. Dieses leitfähige Element 50 ist insbesondere ein bügelförmig gebogener dünner Draht. Der dünne Draht ist bevorzugt maximal 0,5 mm dick und besteht bevorzugt aus Tantal, Platin, Gold oder Silber oder aus einer Kohlenstofffaser. Er ist also leitfähig, aber selbst gegenüber dem aggressiven und korrosiven Medium M geschützt.

Dieser bügelförmige oder U-förmige Draht des leitfähigen Elements 50 wird von außen in das weichdichtende Material des Dichtelements 40, welches selbst nicht leitend ist, eingesteckt, bis die beiden Enden des U-förmigen leitfähigen Elements 50 in der Tasche 43 austreten. Die Schenkel des Bügels des leitfähigen Elements 50 sind so lang, dass sie gerade in die Tasche 43 hineinragen, aber nicht darüber hinaus. Diese Abmessungen sind bekannt und können daher im Voraus berücksichtigt werden.

Ist diese Anordnung vorgesehen, kann danach die Prüfung wunschgemäß erfolgen. Hierzu muss nun noch zwischen den Bauteilen 11 beziehungsweise 12 einerseits und dem bügelförmigen leitfähigen Element 50 andererseits eine Spannung angelegt werden.

Diese Situation ist in der **Figur 4** näher dargestellt. Man sieht hier in einer explodierten Darstellung das Bauteil 12 (das Bauteil 11 ist hier weggelassen), in dem das Befestigungselement 20 mit dem Schraubenkopf 22 befestigt ist (aufgrund der explodierten Darstellung hier auseinandergezogen zu sehen). Um den Schraubenkopf 22 herum befinden sich das Dichtelement 40 und die Kappe 30 und man sieht auch das leitfähige Element 50 mit seiner U-förmigen bügelähnlichen Struktur.

Hier ist nun über eine elektrische Verbindung 60 eine Spannungsquelle 61 so vorgesehen, dass eine Spannung zwischen dem Bauteil 12 und dem leitfähigen Element 50 angelegt ist. War nun das Dichtelement 40 zu irgendeinem Zeitpunkt in der Vergangenheit undicht und es war dem Medium M möglich, in den Innenraum 42 des Dichtelements 40 einzudringen, so bildet nun diese Flüssigkeit aus dem Medium M im Inneren des Innenraums 18 eine elektrisch leitende Verbindung zwischen dem bügelförmigen leitfähigen Element 50 und dem Schraubenkopf 22 beziehungsweise dem Befestigungselement 20.

Diese Leitfähigkeit kann nun durch einen Indikator 62, also ein Anzeigegerät etwa in Form eines Lämpchens, festgestellt werden. Leuchtet dieses Lämpchen, muss davon ausgegangen werden, dass sich eine Flüssigkeit beziehungsweise eine kleine Teilmenge des Mediums M im Innenraum 42 und damit im Inneren der Verbindung befinden.

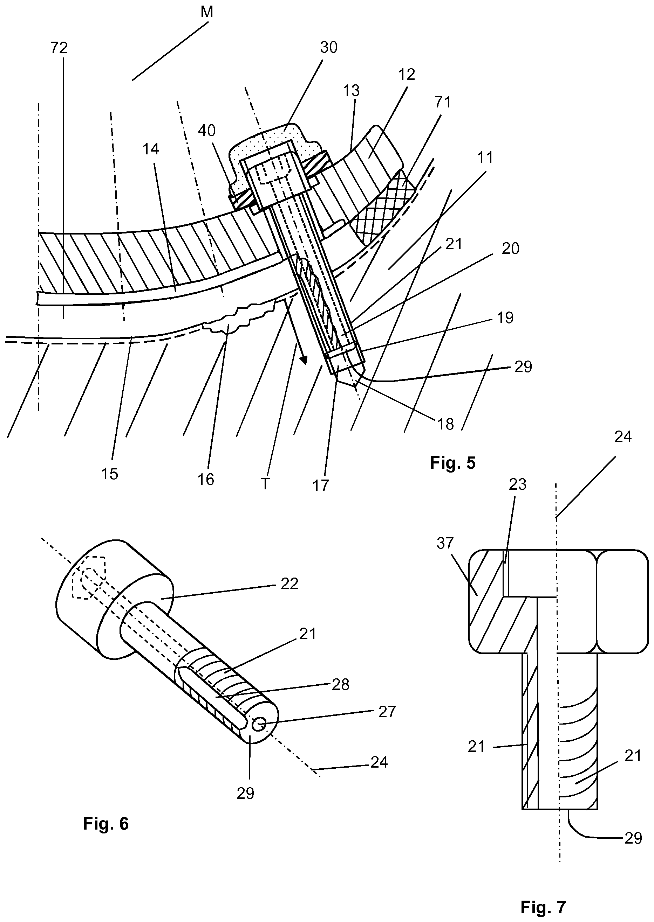

In der **Figur 5** sieht man schematisch eine Situation, wie sie in der Praxis vorkommen kann. Man erkennt ein erstes Bauteil 11, beispielsweise eine Wandung eines Behälters (nicht dargestellt) mit einer Oberfläche 15. Die Oberfläche 15 sei emailliert, was durch Hervorhebung angedeutet ist. Nun sei ein Schaden beziehungsweise ein schadhafter Bereich 16 in der Oberfläche 15 des ersten Bauteils 11 aufgetreten. In dem Behälter mit der Wandung, welche das erste Bauteil 11 bildet, soll nun ein insbesondere aggressives und/oder korrosives Medium M eingefüllt werden, das bisher durch die Emaillierung der Oberfläche 15 daran gehindert wird, das erste Bauteil 11 zu zerstören. Der schadhafte Bereich 16 wäre nun also ein gefährlicher Ansatzpunkt für einen korrosiven Angriffs des Mediums M auf das erste Bauteil 11.

Um dies zu verhindern, wird nun eine Reparaturplatte als zweites Bauteil 12 vor die Oberfläche 15 des ersten Bauteils 11 gesetzt. Zwischen dem ersten Bauteil 11 und dem zweiten Bauteil 12 besteht ein Freiraum, ein inneres Volumen 72. Das innere Volumen 72 wird durch eine umlaufende Dichtung 71 zwischen den beiden Bauteilten 11 und 12 abgeschlossen. Ist nun tatsächlich alles dicht, ist der schadhafte Bereich 16 zuverlässig vor dem Medium M geschützt. Der schadhafte Bereich 16 ist nur in Kontakt mit dem inneren Volumen 72, in welchem sich ungefährliches Gas, beispielsweise Umgebungssauerstoff, befinden kann.

Die Reparaturplatte beziehungsweise das zweite Bauteil 12 kann daher auf seiner dem ersten Bauteil 11 gegenüberliegenden Seite frei von einer Emaillierung sein, weshalb dort ein Rücksprung 14 durch eine umlaufende Kante auf der Unterseite des zweiten Bauteils 12 zu sehen ist.

Um die Reparaturplatte beziehungsweise das zweite Bauteil 12 mit dem Bauteil 11 beziehungsweise der Behälterwandung zu verbinden, ist eine erfindungsgemäße Anordnung mit einem oder mehreren Befestigungselementen 20 vorgesehen, in der dargestellten Ausführungsform in Form einer Schraube. Um diese Schraube montieren zu können, wird zuvor ein Sackloch 17 in das erste Bauteil 11 eingebracht. Man sieht, dass der Bohrer für die Herstellung des Sacklochs 17 mit einer Bohrerspitze auch eine Spitze 18 des Sacklochs 17 in das erste Bauelement 11 eingebracht hat. Das Sackloch 17 wird ferner mit einem Gewinde 19, also einem Innengewinde, versehen.

Nachdem nun die umlaufende Dichtung 71 die Reparaturplatte beziehungsweise das zweite Bauteil 12 aufgebracht sind, wird durch ein vorgefertigtes Loch in dem zweiten Bauteil 12 das Befestigungselement 20 hindurchgeführt und in das Sackloch 17 eingeführt und im Falle einer Schraube mit seinem Außengewinde 21 in das Innengewinde 19 des Sacklochs 17 eingeschraubt.

Das Befestigungselement 20 ragt dabei in das Sackloch 17 bis zu einer Eindringtiefe T, also einer Einschraubtiefe, im Falle eines Schraubelements hinein, nicht bis zum Grund des Sacklochs 17. Man sieht das untere Ende 29 des Befestigungselements 20, das nicht bis zur Spitze 18 des Sacklochs 17 ragt.

Insgesamt ergibt sich wiederum eine Kombination aus Bauteilen 11, 12 und einem Befestigungselement 20 ähnlich der Ausführungsform in den Figuren 1 bis 4.

Hier ist nun eine Ausführungsform dargestellt, die darüber hinaus auch noch eine Prüfung ermöglich, ob das von den beiden Bauteilen 11 und 12 und der umlaufenden Dichtung 71 abgeschlossene innere Volumen 72 tatsächlich dicht ist und garantiert, dass kein äußeres Medium M durch die umlaufende Dichtung 71 bis zu dem geschädigten beziehungsweise schadhaften Bereich 16 in der Oberfläche 15 des ersten Bauteils 11 gelangt.

Um diese Möglichkeit zu schaffen, sind in dem Befestigungselement 20 einige zusätzlich in der **Figur 6** deutlich zu erkennende Maßnahmen vorgesehen worden. Man sieht in dem Befestigungselement 20 mit dem Schraubenkopf 22 und dem Außengewinde 21 eine innere Bohrung 27, welche sich rotationssymmetrisch um die Drehachse 24 durch das gesamte Befestigungselement 20 hindurchzieht. Diese Bohrung reicht also bis zu dem unteren Ende 29 der Schraube und tritt dort aus.

Außerdem ist außen senkrecht zu den Gängen des Gewindes 21 und parallel zur Drehachse 24 eine Nut 28 vorgesehen.

Die gleichen Elemente sind in der Figur 5 auch schon in dem Schnitt zu erkennen. Man sieht dort, dass von dem inneren Volumen 72 aus eine direkte Verbindung über die Nut 28 in dem Befestigungselement 20 in das Sackloch 17 im ersten Bauteil 11 hineinführt. Diese nichtunterbrochene Verbindung setzt sich vom Sackloch 17 aus dann durch die innere Bohrung 27 am unteren Ende 29 des Befestigungselements 20 und durch dieses um seine Drehachse 24 herum bis in den Schraubenkopf 22 hinein fort. Diese Verbindung besteht die ganze Zeit über, solange die Reparaturplatte des zweiten Bauteils 12 mittels eines oder mehrerer Befestigungselemente 20 an dem ersten Bauteil 11 gehalten wird.

Während der Benutzung des Behälters, also zu der Zeit, in der er mit dem Medium M gefüllt ist, ist das obere Ende des Schraubenkopfes 22 aber durch die Kappe 30 und das Dichtelement 40 sicher abgeschlossen und geschützt.

Zur Prüfung der Dichtheit des inneren Volumens 72 wird die Kappe 30 abgenommen (natürlich ist zu diesem Zeitpunkt kein Medium M im Behälter). Die Kappe 30 wird ersetzt durch ein Anschlussstück 37, welches in der **Figur 7** im Schnitt vergrößert dargestellt ist. Mit diesem Anschlussstück 37 kann ein Druckmedium über dem Schraubenkopf 22 durch die Bohrung 27, das Sackloch 17, die Nut 28 in das innere Volumen 72 eingegeben werden. Zuvor kann das innere Volumen 72 evakuiert werden, wenn dies gewünscht ist.

Nach der Füllung des inneren Volumens mit dem vorgegebenen Druckmedium, welches bevorzugt ein gasförmiges Druckmedium ist, kann nun gemessen werden, ob der Druck dieses Druckmediums in dem inneren Volumen 72 nun konstant ist oder ob er sich ändert, insbesondere, ob dieser Druck abnimmt, gegebenenfalls auch, in welcher Geschwindigkeit er abnimmt.

Aus diesen Daten, die auch gespeichert, angezeigt, ausgewertet oder zu Regelungs- oder Steuerungszwecken herangezogen werden können, kann nun entnommen werden, ob denn nun die Dichtung 71 tatsächlich die Bauteile 11 und 12 so gut abdichtet, dass eine vollständige Dichtheit des inneren Volumens 72 erzielt wird.

Ist dies der Fall, so ist die Prüfung wunschgemäß verlaufen. Ist dies nicht der Fall, so ist offenbar die Dichtheit des inneren Volumens 72 unbefriedigend. Dann kann dem entgegengewirkt werden, etwa durch stärkeres Anziehen des oder der Befestigungselemente 20 oder durch Modifizieren oder Auswechseln der Dichtung 71 oder durch andere geeignete Maßnahmen.

Nach Durchführung der Messung kann das Anschlussstück 37 wieder durch die Kappe 30 ersetzt werden und danach dann das Medium M in den durch die Reparaturplatte des Bauteils 12 reparierten Behälter trotz des schadhaften Bereichs 16 eingefüllt werden.

### Bezugszeichenliste

- 11: erstes Bauteil
- 12: zweites Bauteil
- 13: Gegenfläche, insbesondere Oberseite des zweiten Bauteils 12
- 14: Rücksprung durch umlaufende Kante auf der Unterseite des zweiten Bauteils 12
- 15: Oberfläche des ersten Bauteils 11
- 16: Schadhafter Bereich in der Oberfläche 15
- 17: Sackloch im ersten Bauteil 11
- 18: Spitze des Sacklochs 17 hinterlassen durch Bohrer
- 19: Gewinde des Sackloches 17

- 20: Befestigungselement, insbesondere Schraube
- 21: Gewinde am Befestigungselement 20
- 22: Schraubenkopf
- 23: Außengewinde am Schraubenkopf 22
- 24: Drehachse des Befestigungselementes 20
- 25: Innenprofil, insbesondere Innensechskant
- 27: Durchgehende Bohrung durch das Befestigungselement 20
- 28: Nut außen am Befestigungselement bevorzugt parallel zur Drehachse 24
- 29: unteres Ende des Befestigungselements 20

- 30: Kappe, korrosionsbeständig
- 31: Dichtfläche der Kappe 30
- 33: Innengewinde der Kappe 30 zum Eingreifen in das Außengewinde 23
- 34: Polygonales Profil der Kappe
- 35: verrundete Kante des Profils 34
- 37: Anschlussstück, vorübergehend platzierbar anstelle der Kappe 30

- 40: Dichtelement, weichdichtend, vorzugsweise expandiertes PTFE
- 41: äußerer Rand des Dichtelements 40 und Umfang der Dichtfläche
- 42: Innenraum von 40
- 43: Tasche am Innenraum 42 des Dichtelements 40
- 50: leitfähiges Element, insbesondere bügelförmig gebogener dünner Draht

- 60: elektrische Verbindung
- 61: Spannungsquelle
- 62: Indikator, beispielsweise Lämpchen

- 71: Dichtung zwischen ersten Bauteil 11 und zweiten Bauteil 12
- 72: Inneres Volumen zwischen ersten Bauteil 12 und Dichtung 71

- M: Medium, insbesondere aggressiv und/oder korrosiv
- T: Einschraubtiefe des Befestigungselements 20 im ersten Bauteil 11

## Patentansprüche

1. Anordnung mit einem in ein Bauteil (11, 12) schraubbaren Befestigungselement (20) mit einem Gewinde (21) und einem Schraubenkopf (22),
mit einem Dichtelement (40) zum Einschieben in eine Trennfuge zwischen einer Dichtfläche (31) der Anordnung und einer vom Bauteil (11, 12) gebildeten Gegenfläche (13), wobei das Dichtelement (40) durch Anziehen der Schraubverbindung zwischen der Dichtfläche (31) und der Gegenfläche (13) verspannt wird,
**wobei** eine den Schraubenkopf (22) überdeckende Kappe (30) vorgesehen ist,
**wobei** der Schraubenkopf (22) ein Außengewinde (23) und die Kappe (30) ein Innengewinde (33) aufweisen,
**wobei** das Außengewinde (23) und das Innengewinde (33) ineinander eingreifen und ein Aufschrauben der Kappe (30) auf den Schraubenkopf (22) ermöglichen, und
**wobei** die Dichtfläche (31) der Anordnung von einer dem Bauteil (11, 12) zugewandten Unterseite der Kappe (30) gebildet wird,
**dadurch gekennzeichnet,**
**dass** das Dichtelement (40) elektrisch nicht leitfähig ausgebildet ist, und **dass** in dem Dichtelement (40) ein elektrisch leitfähiges Element (50), insbesondere ein bügelförmig gebogener dünner Draht, eingebettet ist, welches eine elektrisch leitfähige Verbindung zwischen der Außenseite des Dichtelements (40) und der dem Befestigungselement (20) zugewandten Innenseite des Dichtelements (40) herstellt.

2. Anordnung nach Anspruch 1,
**dadurch gekennzeichnet,**
**dass** das leitfähige Element (50) ein Draht mit einem maximalen Durchmesser von 0,5 mm ist, der vorzugsweise aus Tantal, Platin, Gold oder Silber oder aus einer Kohlenstofffaser aufgebaut ist.

3. Anordnung nach Anspruch 1 oder 2,
**dadurch gekennzeichnet,**
**dass** das Befestigungselement (20) rotationssymmetrisch um eine Drehachse (24) oder parallel dazu oder geringfügig gekippt dazu eine durchgehende Bohrung (27) aufweist, und
**dass** das Befestigungselement (20) auf seiner Außenseite eine parallel zur Drehachse (24) verlaufende und/oder zumindest über einen von einem unteren Ende (29) des Befestigungselements (20) bis über eine Einschraubtiefe (T) des Befestigungselements (20) in Richtung des Schraubenkopfes (22) ragenden Abschnitt erstreckte Nut (28) aufweist.

4. Anordnung nach einem der vorstehenden Ansprüche,
**dadurch gekennzeichnet,**
**dass** das Dichtelement (40) aus einem expandierten Polytetrafluorethylen (PTFE) besteht, insbesondere aus einem multidirektional expandierten PTFE.

5. Anordnung nach einem der vorstehenden Ansprüche,
**dadurch gekennzeichnet,**
**dass** das Dichtelement (40) zylindrisch und die von ihm gebildete Dichtfläche kreisringförmig ist.

6. Anordnung nach einem der vorstehenden Ansprüche,
**dadurch gekennzeichnet,**
**dass** das Außengewinde (23) und das Innengewinde (33) jeweils Feingewinde sind.

7. Anordnung nach einem der vorstehenden Ansprüche,
**dadurch gekennzeichnet,**
**dass** die Kappe (30) aus einem korrosionsbeständigen Material aufgebaut oder korrosionsbeständig beschichtet ist und/oder selbst elektrisch nicht leitfähig ist.

8. Anordnung nach Anspruch 7,
**dadurch gekennzeichnet,**
**dass** die Kappe (30) emailliert ist und/oder eine elektrisch isolierende Schicht gegenüber einem umgebenden Medium (M) aufweist.

9. Anordnung nach einem der vorstehenden Ansprüche,
**dadurch gekennzeichnet,**
**dass** die Kappe (30) ein polygonales Profil (34) aufweist, welches für ein Aufbringen eines Drehmomentes beim Anziehen der Kappe (30) nutzbar ist.

10. Anordnung nach Anspruch 9,
**dadurch gekennzeichnet,**
**dass** das polygonale Profil (34) der Kappe (30) verrundete Kanten (35) aufweist.

11. Anordnung nach einem der vorstehenden Ansprüche,
**dadurch gekennzeichnet,**
**dass** das Befestigungselement (20) ein Innenprofil (25), insbesondere einen Innensechskant zum Drehen der Schraube (20) um eine Drehachse (24) aufweist.

12. Konstruktion aus einem ersten Bauteil (11) und einem zweiten Bauteil (12), die miteinander durch eine oder mehrere Anordnungen nach einem der Ansprüche 3 bis 11, sofern diese von Anspruch 3 abhängig sind, verbunden sind,
aufweisend ein inneres Volumen (72) zwischen den beiden Bauteilen (11, 12) und einer umlaufenden Dichtung (71),
**wobei** das Befestigungselement (20) mindestens einer der Anordnungen in ein Sackloch (17) in der Oberfläche (15) des ersten Bauteils (11) eingeführt ist, derart, dass von dem inneren Volumen (72) über die Nut (28) auf der Außenseite des Befestigungselements (20) in das Sackloch (17) und von dort durch die durchgehende Bohrung (27) durch das Befestigungselement (20) eine ununterbrochene Verbindung bis zur Kappe (30) des Befestigungselements (20) geführt ist.

13. Verfahren zum Prüfen der Dichtheit einer Anordnung nach einem der Ansprüche 1 bis 11,
**dadurch gekennzeichnet,**
**dass** zwischen dem zu verbindenden Bauteil (12) und dem leitfähigen Element (50) eine Spannung mittels einer Spannungsquelle (61) angelegt wird und mittels eines Indikators (62), insbesondere einem Lämpchen, festgestellt wird, ob ein Strom fließt.

14. Verfahren zum Prüfen der Dichtheit einer Konstruktion nach Anspruch 12,
**dadurch gekennzeichnet,**
**dass** eine Prüfung der Dichtheit der Dichtung (71) des inneren Volumens (72) zwischen dem ersten Bauteil (11) und dem zweiten Bauteil (12) vorgenommen wird, mit folgenden Schritten:
Abnehmen der Kappe (30) der Anordnung,
Aufbringen eines Anschlussstücks (37), bevorzugt Aufschrauben des Anschlussstücks (37) mittels eines Gewindes auf dem Außengewinde (23) am Schraubenkopf (22),
Beaufschlagen des inneren Volumens (72) mit einem Druckmedium mittels des Anschlussstücks (37),
**wobei** das Druckmedium bevorzugt gasförmig ist und optional das Anschlussstück (37) über eine Evakuierung oder Teilevakuierung des inneren Volumens (72) zuvor oder im Anschluss genutzt wird,
Messen des Druckes und/oder der Änderung des Druckes im inneren Volumen (72) und Erfassung und gegebenenfalls Zuführung der Messwerte zu Speicher-, Auswertungs-, Anzeige-, Regel- und/oder Steuereinrichtungen,
optional Anwendung eines blasenbildenden Verfahrens zum Erkennen etwaiger Undichtigkeiten an der Dichtung (71),
gegebenenfalls Nachziehen der Verschraubung des oder der Befestigungselemente (20) und/oder Modifikation der Dichtung (71) zur Reduzierung der Undichtigkeiten, und
Ersetzen des Anschlussstücks (37) durch die Kappe (30) nach erfolgter Prüfung der Dichtheit.

15. Verwendung einer Anordnung nach einem der Ansprüche 1 bis 11 oder einer Konstruktion nach Anspruch 12,
**dadurch gekennzeichnet,**
**dass** mit der Anordnung eine Reparaturplatte als Bauteil (12) auf der Innenseite eines emaillierten Behälters als Bauteil (11) eingesetzt wird.

## Claims

1. Arrangement having a fastening element (20) which is screwable into a component (11, 12) with a screw thread (21) and a screw head (22), having a sealing element (40) for inserting into a parting line between a sealing surface (31) of the arrangement and a counterface (13) formed by the component (11, 12), whereby the sealing element (40) is braced by tightening the screw connection between the sealing surface (31) and the counterface (13),
**wherein** a cap (30) covering the screw head (22) is provided, **wherein** the screw head (22) has an external thread (23) and the cap (30) has an internal thread (33),
**wherein** the external thread (23) and the internal thread (33) engage in one another and enable a screwing of the cap (30) onto the screw head (22), and
**wherein** the sealing face (31) of the arrangement is formed by an underside of the cap (30) facing toward the component (11, 12),
**characterised in that**
the sealing element (40) is formed electrically non-conductive, and
**in that** an electrically conductive element (50) is embedded in the sealing element (40), in particular a thin wire bent into a bow shape, which creates an electrically conductive connection between the exterior of the sealing element (40) and the interior of the sealing element (40) facing toward the fastening element (20).

2. Arrangement according to claim 1,
**characterised in that**
the conductive element (50) is a wire with a maximum diameter of 0.5 mm which is preferably made of tantalum, platinum, gold or silver or of a carbon fibre.

3. Arrangement according to claim 1 or 2,
**characterised in that**
the fastening element (20) has a through bore (27) rotationally symmetrical about a rotation axis (24) or parallel thereto or slightly tilted thereto, and
**in that** the fastening element (20) has a groove (28) on its exterior extending parallel to the rotation axis (24) and/or at least over a portion projecting in the direction of the screw head (22) from a lower end (29) of the fastening element (20) to beyond a screwing-in depth (T) of the fastening element (20).

4. Arrangement according to one of the preceding claims,
**characterised in that**
the sealing element (40) consists of an expanded polytetrafluoroethylene (PTFE), in particular a multidirectionally expanded PTFE.

5. Arrangement according to one of the preceding claims,
**characterised in that**
the sealing element (40) is cylindrical and the sealing surface formed by it is annular.

6. Arrangement according to one of the preceding claims,
**characterised in that**
the external thread (23) and the internal thread (33) are each fine-pitch threads.

7. Arrangement according to one of the preceding claims,
**characterised in that**
the cap (30) is constructed from a corrosion-resistant material or is corrosion-resistantly coated and/or is itself not electrically conductive.

8. Arrangement according to claim 7,
**characterised in that**
the cap (30) is enamelled and/or has a layer that is electrically insulating in relation to a surrounding medium (M).

9. Arrangement according to one of the preceding claims,
**characterised in that**
the cap (30) has a polygonal profile (34) which is usable for an application of a torque during tightening of the cap (30).

10. Arrangement according to claim 9,
**characterised in that**
the polygonal profile (34) of the cap (30) has rounded edges (35).

11. Arrangement according to one of the preceding claims,
**characterised in that**
the fastening element (20) has an internal profile (25), in particular an internal hexagon for rotating the screw (20) about a rotation axis (24).

12. Construction made of a first component (11) and a second component (12) which are connected to one another by means of one or more arrangements according to one of the claims 3 to 11, provided they are dependent on claim 3,
having an internal volume (72) between the two components (11, 12) and a peripheral seal (71),
**wherein** the fastening element (20) of at least one of the arrangements is introduced into a blind hole (17) in the surface (15) of the first component (11) such that an uninterrupted connection is provided from the internal volume (72) via the groove (28) on the exterior of the fastening element (20) into the blind hole (17) and from there through the through bore (27) through the fastening element (20), as far as the cap (30) of the fastening element (20).

13. Method for testing the tightness of an arrangement according to one of the claims 1 to 11,
**characterised in that**
a voltage is applied by means of a voltage source (61) between the component (12) to be connected and the conductive element (50) and by means of an indicator (62), in particular a lamp, it is ascertained whether a current is flowing.

14. Method for testing the tightness of a construction according to claim 12,
**characterised in that**
a testing of the tightness (71) of the internal volume (72) between the first component (11) and the second component (12) is undertaken, having the following steps:
removing the cap (30) of the arrangement,
applying a connecting piece (37), preferably screwing on the connecting piece (37) by means of a screw thread onto the external thread (23) on the screw head (22),
applying a pressurised medium to the internal volume (72) via the connecting piece (37),
**wherein** the pressurised medium is preferably gaseous and, optionally,
the connecting piece (37) is used beforehand or subsequently for an evacuation or partial evacuation of the internal volume (72),
measuring the pressure and/or the change of pressure in the internal volume (72) and acquiring and possibly feeding the measurement values to memory store, evaluation, display, regulating and/or control devices,
and optionally using a bubble-forming method for detecting any lack of tightness in the seal (71),
possibly tightening the screw-fixing of the fastening element or elements (20) and/or modification of the seal (71) for reducing the leaks, and replacement of the connection piece (37) with the cap (30) after completed testing of the tightness.

15. Use of an arrangement according to one of the claims 1 to 11 or of a construction according to claim 12,
**characterised in that**
with the arrangement, a repair plate as a component (12) is inserted on the inside of an enamelled container as a component (11).

## Revendications

1. Agencement comprenant un élément de fixation (20) fileté dans un composant (11, 12) avec un filetage (21) et une tête de vis (22), avec un élément d'étanchéité (40) pour l'insertion dans un joint de séparation entre une surface d'étanchéité (31) de l'agencement et une contre-surface (13) formée par le composant (11, 12), dans lequel l'élément d'étanchéité (40) est serré par serrage du raccord vissé entre la surface d'étanchéité (31) et la contre-surface (13),
**dans** lequel un capot (30) recouvrant la tête de vis (22) est prévu,
**dans** lequel la tête de vis (22) présente un filetage extérieur (23) et le capot (30) un filetage intérieur (33),
**dans** lequel le filetage extérieur (23) et le filetage intérieur (33) entrent en prise l'un avec l'autre et permettent un vissage du capot (30) sur la tête de vis (22), et
**dans** lequel la surface d'étanchéité (31) de l'agencement est formée par une face inférieure du capot (30) tournée vers le composant (11, 12),
**caractérisé en ce que**
l'élément d'étanchéité (40) est réalisé de manière à être électriquement non conducteur, et
un élément électriquement conducteur (50), en particulier un fil fin incurvé en forme d'étrier, lequel établit une liaison électriquement conductrice entre le côté extérieur de l'élément d'étanchéité (40) et le côté intérieur de l'élément d'étanchéité (40) tourné vers l'élément de fixation (20), est fabriqué dans l'élément d'étanchéité (40).

2. Agencement selon la revendication 1,
**caractérisé en ce que**
l'élément conducteur (50) est un fil d'un diamètre maximum de 0,5 mm, qui est constitué de préférence de tantale, platine, or ou argent ou d'une fibre de carbone.

3. Agencement selon la revendication 1 ou 2,
**caractérisé en ce que**
l'élément de fixation (20) présente un perçage traversant (27) à symétrie de rotation autour d'un axe de rotation (24) ou parallèle ou légèrement incliné par rapport à celui-ci, et
l'élément de fixation (20) présente sur son côté extérieur une rainure (28) s'étendant parallèlement à l'axe de rotation (24) et/ou au moins sur une section dépassant d'une extrémité inférieure (29) de l'élément de fixation (20) jusqu'à une profondeur de vis (T) de l'élément de fixation (20) en direction de la tête de vis (22).

4. Agencement selon l'une quelconque des revendications précédentes,
**caractérisé en ce que**
l'élément d'étanchéité (40) se compose d'un polytétrafluoroéthylène expansé (PTFE), en particulier d'un PTFE expansé multidirectionnel.

5. Agencement selon l'une quelconque des revendications précédentes,
**caractérisé en ce que**
l'élément d'étanchéité (40) est cylindrique et la surface d'étanchéité formée par celui-ci est en forme d'anneau circulaire.

6. Agencement selon l'une quelconque des revendications précédentes,
**caractérisé en ce que**
le filetage extérieur (23) et le filetage intérieur (33) sont respectivement des filetages fins.

7. Agencement selon l'une quelconque des revendications précédentes,
**caractérisé en ce que**
le capot (30) est constitué d'un matériau résistant à la corrosion ou est revêtu de manière à être résistant à la corrosion et/ou est lui-même électriquement non conducteur.

8. Agencement selon la revendication 7,
**caractérisé en ce que**
le capot (30) est émaillé et/ou présente une couche électriquement isolante par rapport à un milieu environnant (M).

9. Agencement selon l'une quelconque des revendications précédentes,
**caractérisé en ce que**
le capot (30) présente un profil polygonal (34), lequel peut être utilisé pour une application d'un couple lors du serrage du capot (30).

10. Agencement selon la revendication 9,
**caractérisé en ce que**
le profil polygonal (34) du capot (30) présente des arêtes arrondies (35).

11. Agencement selon l'une quelconque des revendications précédentes,
**caractérisé en ce que**
l'élément de fixation (20) présente un profil intérieur (25), en particulier un six pans creux pour la rotation de la vis (20) autour d'un axe de rotation (24).

12. Construction formée d'un premier composant (11) et d'un deuxième composant (12), qui sont reliés l'un à l'autre par un ou plusieurs agencements selon l'une quelconque des revendications 3 à 11, dans la mesure où celles-ci sont dépendantes de la revendication 3, présentant un volume intérieur (72) entre les deux composants (11, 12) et un joint périphérique (71),
**dans** laquelle l'élément de fixation (20) d'au moins un des agencements est introduit dans un trou borgne (17) dans la surface (15) du premier composant (11) de sorte qu'une liaison ininterrompue est guidée jusqu'au capot (30) de l'élément de fixation (20) depuis le volume intérieur (72) via la rainure (28) sur le côté extérieur de l'élément de fixation (20) dans le trou borgne (17) et de là au travers du perçage traversant (27) à travers l'élément de fixation (20).

13. Procédé de contrôle de l'étanchéité d'un agencement selon l'une quelconque des revendications 1 à 11,
**caractérisé en ce que**
une tension est appliquée entre le composant (12) à relier et l'élément conducteur (50) au moyen d'une source de tension (61) et il est constaté au moyen d'un indicateur (62), en particulier d'un voyant, si un courant circule.

14. Procédé de contrôle de l'étanchéité d'une construction selon la revendication 12,
**caractérisé en ce que**
un contrôle de l'étanchéité du joint (71) du volume intérieur (72) entre le premier composant (11) et le deuxième composant (12) est réalisé, avec les étapes suivantes :
retrait du capot (30) de l'agencement,
fourniture d'une pièce de raccordement (37), de préférence vissage de la pièce de raccordement (37) au moyen d'un filetage sur le filetage extérieur (23) au niveau de la tête de vis (22),
sollicitation du volume intérieur (72) avec un milieu de pression au moyen de la pièce de raccordement (37),
**dans** lequel le milieu de pression est de préférence gazeux et facultativement la pièce de raccordement (37) est utilisée via une évacuation ou évacuation partielle du volume intérieur (72) avant ou après,
mesure de la pression et/ou de la variation de la pression dans le volume intérieur (72) et détection et le cas échéant apport des valeurs de mesure à des dispositifs de mémoire, d'évaluation, d'affichage, de régulation et/ou de commande, facultativement application d'un procédé formant des bulles pour distinguer d'éventuels défauts d'étanchéité au niveau du joint (71),
le cas échéant resserrage du vissage du ou des éléments de fixation (20) et/ou modification du joint (71) pour la réduction des défauts d'étanchéité, et
remplacement de la pièce de raccordement (37) par le capot (30) après réalisation du contrôle de l'étanchéité.

15. Utilisation d'un agencement selon l'une quelconque des revendications 1 à 11 ou d'une construction selon la revendication 12,
**caractérisée en ce que**
une plaque de réparation est utilisée en tant que composant (12) avec l'agencement sur le côté intérieur d'un récipient émaillé en tant que composant (11).
